(19) Europäisches Patentamt
European Patent Office
Office européen des brevets

(11) **EP 2 136 489 A1**

(12) **EUROPEAN PATENT APPLICATION**

(43) Date of publication:
**23.12.2009 Bulletin 2009/52**

(51) Int Cl.:
*H04B 17/00* (2006.01)    *H04B 1/10* (2006.01)

(21) Application number: **08010955.6**

(22) Date of filing: **17.06.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(71) Applicant: **Harman Becker Automotive Systems GmbH**
**76307 Karlsbad (DE)**

(72) Inventor: **Sliskovic, Maja**
**76275 Ettlingen (DE)**

(74) Representative: **Bertsch, Florian Oliver et al**
**Kraus & Weisert**
**Patent- und Rechtsanwälte**
**Thomas-Wimmer-Ring 15**
**80539 München (DE)**

(54) **Method and device for detecting an interfering adjacent channel signal**

(57)    A device (13) for detecting an interfering adjacent channel signal comprises an input for receiving a signal (14) comprising a wanted signal and an interfering adjacent channel signal, a square envelope detector unit (15) adapted to determine a square envelope signal (16) of the received signal (14), and an analyzing means (17, 19, 21) adapted to analyze the square envelope signal (16) to detect the interfering adjacent channel signal.

FIG. 2

**Description**

This invention relates to a method and a device for detecting an interfering adjacent channel signal, and in particular to a method and a device for detecting an interfering adjacent channel signal for communication systems with constant modulus property or with slowly varying modulus.

Related Art

With a growing demand for wireless communication the available frequency spectrum is used more efficiently by utilizing the minimum allowable channel spacing of the frequency spectrum. For example in FM radio broadcast transmissions, in some countries a channel spacing of 50 kHz is already used.

For receiving a wanted signal transmitted within the frequency spectrum in an optimized manner, a receiver typically provides several settings, for example filter settings, which have to be selected appropriately in response to current receiving conditions and in response to interferences of adjacent channels in the frequency band. Therefore, a receiver typically comprises a detector for detecting an adjacent channel interference.

An adjacent channel interference detector may be based on a comparison of field strengths at outputs from two filters with different bandwidths. However, such a detector may generate a false detection if for example the modulated wanted signal has a large deviation. Furthermore, an adjacent channel interference detector may be based on an out-of-band noise of the demodulated signal. However, such a detector requires two intermediate frequency paths or two baseband paths, including two demodulators. This implies considerable additional cost for the receiver. Finally, an adjacent channel interference detection may be based on the analysis of a multi-path detector output. However, if a relatively strong multi-path propagation is present, a false detection may occur indicating an adjacent interferer although there is no adjacent interferer, but only a multi-path propagation.

Therefore, a need exists to provide a method and a device for detecting an interfering adjacent channel signal providing a reliable detection at low cost which is robust against multi-path propagation and modulated signals with large deviation.

Summary of the invention

According to this invention this need is met by a method for detecting an interfering adjacent channel signal as defined in claim 1, a device for detecting an interfering adjacent channel signal as defined in claim 12, and a receiver unit as defined in claim 22. The dependent claims define preferred and advantageous embodiments of the invention.

According to an aspect of the invention, a method for detecting an interfering adjacent channel signal is provided. The method comprises receiving a signal comprising a wanted signal and the interfering adjacent channel signal, determining a square envelope signal of the received signal, and analyzing the square envelope signal to detect the interfering adjacent channel signal. The received signal may comprise a complex baseband signal of the wanted signal, which may be provided by a tuner of a radio receiver. The wanted signal may have a constant modulus property or may have a slowly varying modulus. In the case of a slowly varying modulus, the frequency of the slowly varying modulus may be less than half of the distance between carriers of the wanted signal and the interfering adjacent channel signal. Therefore, the method is especially appropriate for detecting an interfering adjacent channel signal in receiving a frequency-modulated (FM) signal of for example a radio broadcast transmission in the very high frequency (VHF) band.

Analyzing the square envelope signal may comprise a frequency content analysis of the square envelope signal around a frequency that is equal to the distance between carriers of the wanted signal and the interfering adjacent channel signal. By analyzing the frequency content around the frequency of a neighboring carrier, as defined in the frequency spacing of the used frequency band, the frequency content analysis provides a reliable detection of an interfering adjacent channel signal. For example, in the case of a FM radio broadcast transmission in the VHF band, the distance between carriers of the wanted signal and the interfering adjacent channel signal may be for example 50 or 100 kHz.

According to an embodiment analyzing the square envelope signal comprises the following steps. First, the square envelope signal is filtered by a band-pass to provide a band-pass filtered signal. Then, a peak value of the band-pass filtered signal is determined. By comparing the peak value of the band-pass filtered signal with a predetermined threshold, it is determined if an interfering adjacent channel signal is present. This embodiment provides a cost-effective method for detecting an interfering adjacent channel signal. As the peak value of the band-pass filtered signal is proportional to the amplitudes of both wanted signal and interfering signal, an adequate fixed threshold in the order of magnitude of the amplitude of the wanted signal can be used for reliably determining if an interfering adjacent channel signal is present.

According to an embodiment analyzing the square envelope signal comprises the following steps. First, the square envelope signal is filtered by a band-pass to provide a band-pass filtered signal. Then, the power of the band-pass filtered signal is determined. By comparing the power of the band-pass filtered signal with a predetermined threshold, it is determined if an interfering adjacent channel signal is present. This embodiment provides a cost-effective method for detecting an interfering adjacent channel signal. As the power of the band-pass filtered signal is proportional to the amplitudes of both wanted signal and interfering signal, an adequate fixed threshold in the order of magnitude of the amplitude of the wanted signal can be used for reliably determining if an interfering adjacent channel signal is present.

According to another embodiment instead of using a band-pass filter for providing the band-pass filtered signal in the above-described embodiment, a high-pass filter may be used to provide a high-pass filtered signal. The power of the high-pass filtered signal is then determined and by comparing the power of the high-pass filtered signal with a predetermined threshold value it is determined if an interfering adjacent channel signal is present. The band-pass filter may have a center frequency which corresponds to the frequency spacing used in the frequency band of the transmission system. The bandwidth of the band-pass filter may be for example equal to the frequency spacing or equal to half of the frequency spacing. The high-pass filter may have a cut-off frequency of for example the frequency spacing of the frequency band of the used transmission system or half of the frequency spacing. Using a high-pass filter instead of the band-pass filter provides an even more cost-effective realization of the interfering adjacent channel signal. Replacing the band-pass filter with the high-pass filter is possible without any disadvantages if the tuner demodulating a received radio signal to the baseband already provides a filtering of interfering channels having a frequency distance of at least twice the frequency spacing.

According to another embodiment in the method for detecting an interfering adjacent channel signal analyzing the square envelope signal comprises the steps of band-pass filtering the square envelope signal to provide a band-pass filtered signal as described above, determining the power of the band-pass filtered signal as described above, low-pass filtering the square envelope signal to provide a low-pass filtered signal, and determining if an interfering adjacent channel signal is present by comparing the power of the band-pass filtered signal with the low-pass filtered signal.

As described above, the determined power of the band-pass filtered signal is proportional to the amplitudes of both wanted and interfering signal. The low-pass filtered signal is proportional to the square amplitude of the wanted signal. Therefore, comparing the low-pass filtered signal with the power of the band-pass filtered signal results in a reliable indication if an interfering adjacent channel signal is present or not.

Furthermore, a moving average of the low-pass filtered signal may be determined and determining if an interfering adjacent channel signal is present is then performed by comparing the power of the band-pass filtered signal with the moving average of the low-pass filtered signal. As the moving average of the low-pass filtered signal changes its value in response to the modulus of the received signal, this method is also appropriate for received signals having a slowly varying modulus.

According to another embodiment, in the method for detecting an interfering adjacent channel signal as described above, analyzing the square envelope signal comprises the following steps. First, a band-pass filtering of the square envelope signal is performed to provide a band-pass filtered signal. Then, the power of the band-pass filtered signal is determined. The square envelope signal is furthermore low-pass filtered to provide a low-pass filtered signal. Finally, the power of the interfering adjacent channel signal is determined from the power of the band-pass filtered signal and the low-pass filtered signal.

By appropriately scaling the power of the band-pass filtered signal and the low-pass filtered signal, the power of the interfering adjacent channel signal can be derived. Therefore, this embodiment of the method does not only detect an interfering adjacent channel signal, but also provides the power of the detected interfering adjacent channel signal. The determined power of the interfering adjacent channel signal may then be used to appropriately configure a tuner of a receiver.

Furthermore, a moving average of the low-pass filtered signal may be determined and the power of the interfering adjacent channel signal is then determined from the power of the band-pass filtered signal and the moving average of the low-pass filtered signal. As the moving average of the low-pass filtered signal changes its value in response to the modulus of the received signal, this method is also appropriate for received signals having a slowly varying modulus.

According to another aspect of the present invention, a device for detecting an interfering adjacent channel signal is provided. The device comprises an input for receiving a signal comprising a wanted signal and an interfering adjacent channel signal, a square envelope detector unit adapted to determine a square envelope signal of the received signal, and an analyzing means adapted to analyze the square envelope signal to detect the interfering adjacent channel signal. As the square envelope signal of the received signal is proportional to the amplitudes of both wanted and interfering signal, a detection of the interfering adjacent channel signal can be easily accomplished by analyzing the square envelope signal.

According to an embodiment the received signal comprises a complex baseband signal of the wanted signal having a constant modulus property. Furthermore, the analyzing means may comprise a band-pass filter adapted to filter the square envelope signal and providing a band-pass filtered signal, a power calculation unit adapted to determine the power of the band-pass filtered signal, and a comparator adapted to compare the power of the band-pass filtered signal with a predetermined threshold value. As the power of the band-pass filtered signal is proportional to the amplitude of the interfering signal and the amplitude of the wanted signal and the wanted signal has a constant modulus property and is therefore constant, a comparator comparing the power of the band-pass filtered signal with a predetermined threshold can reliably indicate the presence of an interfering adjacent channel signal.

Additionally, a peak detector unit can be provided or the power calculation unit can be replaced by a peak detector unit. The peak detector unit is adapted to determine a peak value of the band-pass filtered signal. The comparator is then adapted to compare the peak value of the band-pass filtered signal with a predetermined threshold value. As the peak value of the band-pass filtered signal is proportional to the amplitude of the interfering signal and the amplitude of the wanted signal and the wanted signal has a constant modulus property and is therefore constant, a comparator comparing the peak value of the band-pass filtered signal with a predetermined threshold can reliably indicate the presence of an interfering adjacent channel signal.

According to another embodiment the band-pass filter may be replaced by a high-pass filter adapted to filter the square envelope signal and providing a high-pass filtered signal instead of the band-pass filtered signal. If a tuner providing the baseband signal of the wanted signal already cuts off interfering signals having at least twice the frequency distance of the frequency spacing, the output of the high-pass filter will be the same as the output of the band-pass filter of the embodiment above, and therefore in this case a high-pass filter provides a sufficient and more cost-effective solution.

According to another embodiment the device for detecting an interfering adjacent channel signal may comprise an analyzing means comprising a band-pass filter adapted to filter the square envelope signal to provide a band-pass filtered signal, a power calculation unit adapted to determine the power of the band-pass filtered signal, a low-pass filter adapted to filter the square envelope signal to provide a low-pass filtered signal, and a comparator adapted to compare the power of the band-pass filtered signal with the low-pass filtered signal.

As described above, the power of the band-pass filtered signal is proportional to the amplitudes of both wanted and interfering signal. The low-pass filtered signal is proportional to the square amplitude of the wanted signal. Therefore, comparing the power of the band-pass filtered signal with the low-pass filtered signal delivers a reliable indication if an interfering adjacent channel signal is present or not.

In this embodiment the analyzing means may additionally comprise a moving average unit adapted to determine the moving average of the low-pass filtered signal. Then, the comparator may be adapted to compare the power of the band-pass filtered signal with the moving average of the low-pass filtered signal. Comparing the power of the band-pass filtered signal with the moving average of the low-pass filtered signal delivers a reliable indication if an interfering adjacent channel signal is present or not. Especially in the case of a wanted signal having a slowly varying modulus, wherein the frequency of the slowly varying modulus may be less than half of the distance between carriers of the wanted signal and the interfering adjacent channel signal (i.e. the channel spacing of the used frequency band), this embodiment ensures a very reliable detection of the presence of an interfering adjacent channel signal.

According to another embodiment, the latter embodiment may be modified in such a way that the comparator is replaced by a calculation unit adapted to determine the power of the interfering adjacent channel signal from the power of the band-pass filtered signal and the low-pass filtered signal or the moving average of the low-pass filtered signal, respectively. By appropriately scaling the power of the band-pass filtered signal and the low-pass filtered signal or the moving average of the low-pass filtered signal in the calculation unit and appropriately combining these two values in the calculation unit, a signal corresponding to the power of the interfering adjacent channel signal can be derived. A tuner of a receiver for receiving the wanted signal may use the determined power of the interfering adjacent channel signal for setting its receiver and filter characteristics accordingly.

The above-described method and the above-described device may be advantageously used when receiving frequency-modulated broadcast signals, for example radio broadcast signals in the VHF band.

According to another aspect of the present invention, a receiver unit is provided. The receiver unit comprises a tuner adapted to receive frequency-modulated signals comprising a wanted signal and an interfering adjacent channel signal and adapted to provide a received signal comprising a complex baseband signal of the wanted signal, and a device for detecting an interfering adjacent channel signal as described above. With the indication of the device for detecting an interfering adjacent channel signal whether an interfering adjacent channel signal is present in the received signal, the tuner can appropriately adapt its receive and filter characteristics to provide an enhanced reception of the wanted signal.

Brief Description of the Drawings

The invention will now be described in more detail with reference to the accompanying drawings.

Fig. 1 shows a flowchart of the method steps for detecting an interfering adjacent channel signal according to the present invention.

Fig. 2 shows a schematic diagram of a receiver unit comprising a device for detecting an interfering adjacent channel signal according to an embodiment of the present invention.

Fig. 3 shows a schematic diagram of another embodiment of the receiver unit comprising a device for detecting an interfering adjacent channel signal.

Fig. 4a shows a schematic diagram of a further embodiment of a receiver unit comprising a device for detecting an interfering adjacent channel signal according to the present invention.

Fig. 4b shows a schematic diagram of an analog peak detector unit.

Fig. 4c shows a flowchart of a method for realizing a linear peak detector.

Fig. 4d shows a flowchart of a method for realizing an exponential peak detector.

Fig. 5 shows a schematic diagram of another embodiment of a receiver unit comprising a device for detecting an interfering adjacent channel signal.

Fig. 6 shows a schematic diagram of still another embodiment of a receiver unit comprising a device for detecting an interfering adjacent channel signal according to the present invention.

Detailed Description of Preferred Embodiments

Although in this description the method and the device for detecting an interfering adjacent channel is mainly described in connection with receiving a frequency-modulated (FM) radio broadcast signal in the VHF band, the method and the device may also be used in any other kind of communication system regardless of wireless or wired transmissions.

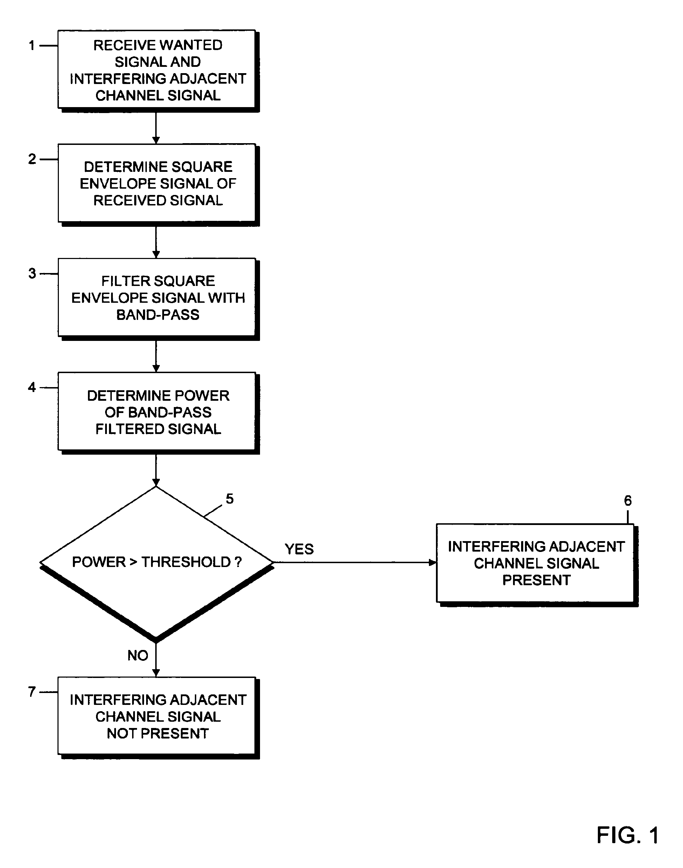

Fig. 1 shows a flowchart of a method for detecting an interfering adjacent channel signal according to an embodiment of the present invention. In a first step 1 of the method a signal comprising a wanted signal and an interfering adjacent channel signal is received. The received signal comprises a complex baseband signal of the wanted signal. In the case of a radio receiver receiving frequency-modulated (FM) signals in the VHF band the received signal comprises the wanted signal in baseband and an interfering adjacent channel signal around a frequency of $\Delta f$, wherein $\Delta f$ corresponds to the frequency spacing used in the VHF radio broadcast band, for example $\Delta f = 50$ kHz or $\Delta f = 100$ kHz. In FM transmissions the wanted channel and the adjacent channel have a constant modulus or a slowly varying modulus, wherein the frequency of the slowly varying modulus is at least less than half of the frequency distance between carriers of the wanted signal and the adjacent channel signal.
The wanted signal s(t) of the received signal can be represented in baseband by the following equation

$$s(t) = A \cdot e^{j \cdot m(t)} \qquad\qquad (1),$$

where m(t) is a function of a transmitted information of the wanted signal and A is the amplitude of the wanted signal. When an interfering adjacent channel signal is present, the received signal r(t) will be the sum of the wanted signal s(t) and the interfering adjacent channel signal as defined in the following equation

$$r(t) = s(t) + A_a \cdot e^{j\Delta\omega t} \cdot e^{ja(t)} = A \cdot e^{j \cdot m(t)} + A_a \cdot e^{j\Delta\omega t} \cdot e^{ja(t)} \qquad\qquad (2)$$

where a(t) is a function of an information of the interfering adjacent channel signal, $A_a$ is the amplitude of the interfering adjacent channel signal, and $\Delta f = \Delta\omega/2\pi$ is the distance between carriers of the wanted signal s(t) and the interfering adjacent channel signal.
According to Fig. 1, in step 2 a square envelope signal of the received signal is determined according to the following equation

$$sq\_env(r(t)) = A^2 + 2 \cdot A \cdot A_a \cdot e^{j\Delta\omega t} \cdot e^{j(m(t)+a(t))} + A_a^2 \cdot e^{j2\Delta\omega t} \cdot e^{j2a(t)} \quad (3)$$

As can be seen from equation (3), the square envelope signal of the received signal comprises a first constant summand proportional to the square of the amplitude of the wanted signal, a second summand around $\Delta\omega$ proportional to the amplitudes of both wanted signal and interfering signal, and a third summand at $2\Delta\omega$ proportional to the square of the amplitude of the interfering signal.

In the next step 3, according to Fig. 1 the square envelope signal of the received signal is filtered with the band-pass. The band-pass is adapted to pass only the second summand and has therefore for example a center frequency of $\Delta\omega$ and a bandwidth of $\Delta\omega/2$.

In step 4 of Fig. 1 the power of the band-pass filtered signal is determined. This may be accomplished by squaring and filtering the band-pass filtered signal or by squaring and averaging the band-pass filtered signal.

Then, as shown in step 5 in Fig. 1, the power of the band-pass filtered signal is compared with a predetermined threshold value. The predetermined threshold value may be selected in a range of 0.01 to 1 times the power of a typical power of the wanted signal. If the power of the band-pass filtered signal exceeds the threshold value, it is determined that an interfering adjacent channel signal is present as indicated in step 6 in Fig. 1. If the power of the band-pass filtered signal does not exceed the threshold value, it is determined that no interfering adjacent channel signal is present, as indicated in step 7 of Fig. 1.

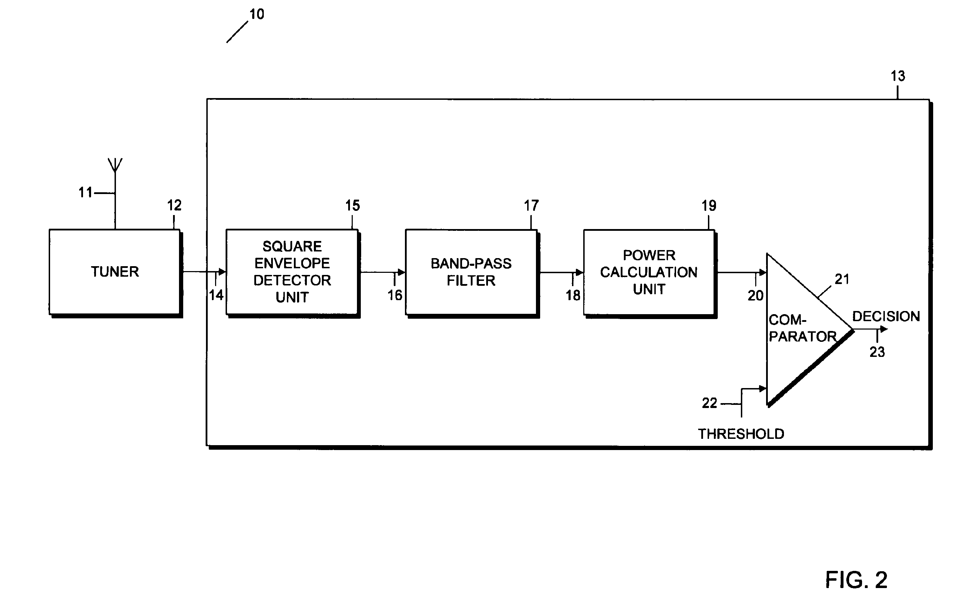

Fig. 2 shows a schematic diagram of a receiver unit 10 comprising an antenna 11 for receiving a radio signal and a tuner 12 for selecting a wanted signal and providing the wanted signal in baseband as a received signal 14 which is provided to a device 13 of the receiver unit 10 for detecting an interfering adjacent channel signal. Depending on receive and filter settings of the tuner 12 the received signal 14 may additionally comprise an interfering adjacent channel signal. The device 13 for detecting an interfering adjacent channel signal determines if an interfering adjacent channel signal is present and feedbacks this information to the tuner 12. In response to this information the tuner 12 may adapt its receive and filter settings to optimize the reception of the receiver unit 10.

The device 13 for detecting an interfering adjacent channel signal comprises a square envelope detector unit 15, a band-pass filter 17, a power calculation unit 19 and a comparator 21. The received signal 14 from the tuner 12 is fed to the square envelope detector unit 15, where a square envelope signal of the received signal is calculated. The square envelope detector unit calculates a square of an absolute value of the input signal. For a complex number the square of the absolute value of an input signal equals the product of the input signal and the complex conjugate of the input signal. Therefore, if the input signal comprises the wanted signal in baseband and an adjacent channel signal at $\Delta\omega$ as shown in equation (2) above, the square envelope signal 16 of the received signal 14 corresponds to the signal sq_env(r(t)) of equation (3). This square envelope signal 16 is then fed to the band-pass filter 17. The band-pass filter 17 has e.g. a center frequency of $\Delta\omega$ and a bandwidth of $\Delta\omega/2$. If the channel spacing is for example 50 kHz, the band-pass filter has a center frequency of 50 kHz and a bandwidth of 25 kHz. Therefore, the band-pass filter 17 cuts off the first summand and the third summand of the square envelope signal of equation (3) and substantially passes only the second summand of equation (3) as the band-pass filtered signal 18 to the power calculation unit 19. The power calculation unit 19 determines the power of the band-pass filtered signal 18, for example by squaring and filtering the band-pass filtered signal 18. Thus, the power calculation unit 19 provides a power signal 20 of the band-pass filtered signal 18 to the comparator 21. The power signal 20 can therefore be represented by the following equation

$$p = 4 \cdot A^2 \cdot A_a^2 \quad (4)$$

Thus, power signal 20 is proportional to the square of the amplitudes of both wanted signal and interfering signal.

To a second input of the comparator 21 a threshold 22 is provided. This threshold 22 may be a fixed threshold or a variable threshold as described in connection with other embodiments later on. If the threshold 22 is a fixed threshold, it may be predetermined in a range from 0.0025 x $A_t^2$ to $A_t^2$, wherein At is a typical amplitude of the wanted signal.

If the power 20 of the band-pass filtered signal exceeds the threshold 22, comparator 21 indicates at its output 23 that an interfering adjacent channel signal is present. If the power signal 20 of the band-pass filtered signal does not exceed the threshold value 22, comparator 21 indicates at its output 23 that no interfering adjacent channel signal is present. The output of comparator 21 may be used by the tuner 12 to adapt its receive and filter settings accordingly.

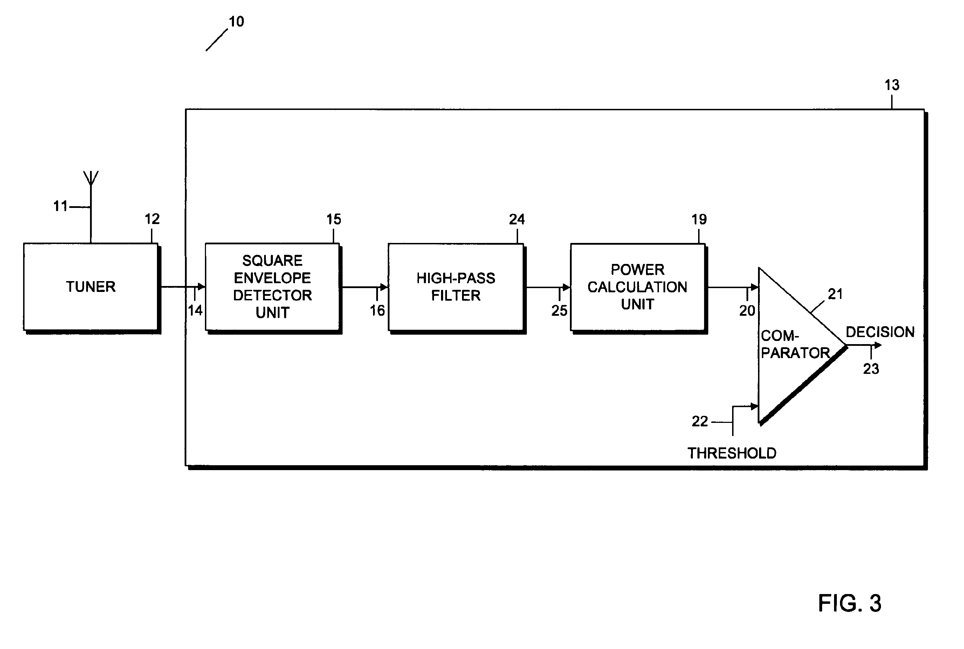

Fig. 3 shows another embodiment of a receiver unit 10. This embodiment substantially corresponds to the embodiment of Fig. 2, unless the band-pass filter 17 is now replaced by a high-pass filter 24. The cut-off frequency of the high-pass filter 24 is selected such that the first summand of equation (3) of the square envelope signal 16 is cut off. Thus, the high-pass filtered signal 25 comprises the second and third summand of the square envelope signal 16 of equation (3) which is then forwarded to the power calculation unit 19.

The cut-off frequency may therefore e.g. be selected as $\Delta\omega/2$. The power calculation unit 19 is adapted to calculate the power of the high-pass filtered signal 25 in such a way that the power signal 20 is a function of the amplitudes of the wanted signal and the interfering signal only. This may be accomplished by a squaring function and an appropriate filter function in the power calculation unit 19. As described in connection with Fig. 2, the resulting power signal 20 is then compared by the comparator 21 with a threshold 22 to decide whether an interfering adjacent channel signal is present or not. Again, as described in connection with Fig. 2, this decision value 23 is then fed back to the tuner 12 to enable an appropriate setting of the tuner 12.

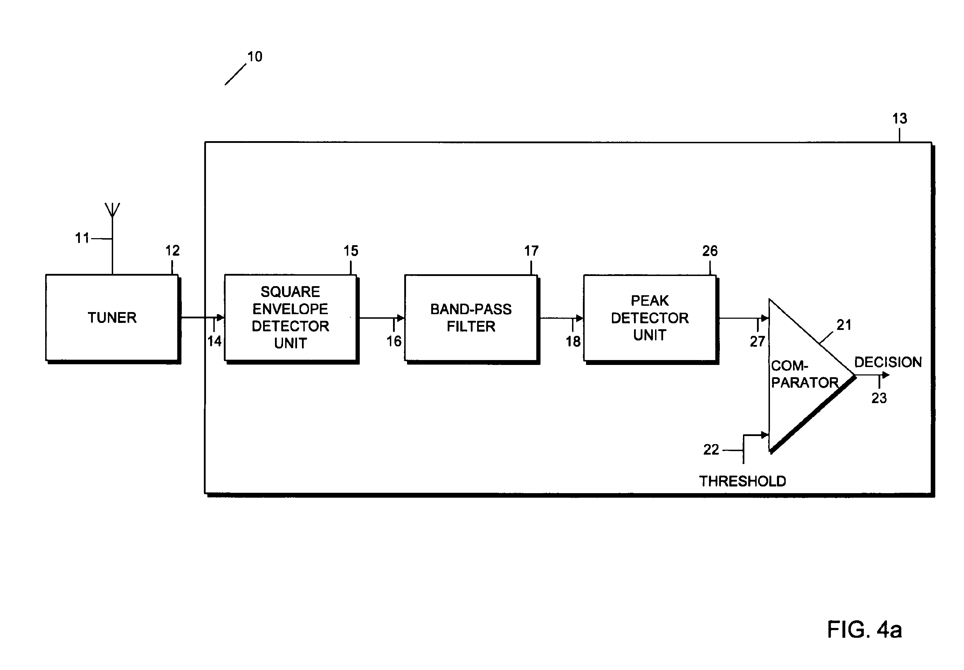

Fig. 4a shows another embodiment of a receiver unit 10. This embodiment substantially corresponds to the embodiment shown in Fig. 2 unless the power calculation unit 19 of the embodiment in Fig. 2 is now replaced by a peak detector unit 26. The peak detector unit 26 calculates a peak detector signal 27 from the band-pass filtered signal 18, the peak detector signal 27 being proportional to the amplitudes of both wanted and interfering signal. The peak detector signal 27 is passed to the comparator 21, where it is compared with a threshold value 22 to decide whether an interfering adjacent channel signal is present or not. Again, the decision signal 23 of the comparator 21 is then passed to the tuner 12 of the receiver unit 10 to enable appropriate setting of receiver and filter settings of the tuner 12.

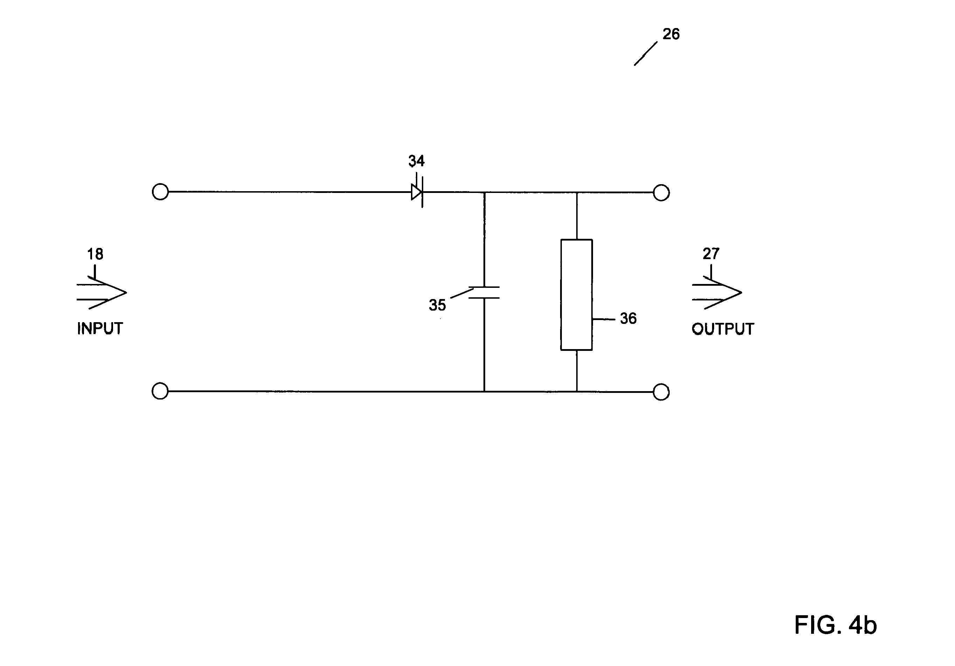

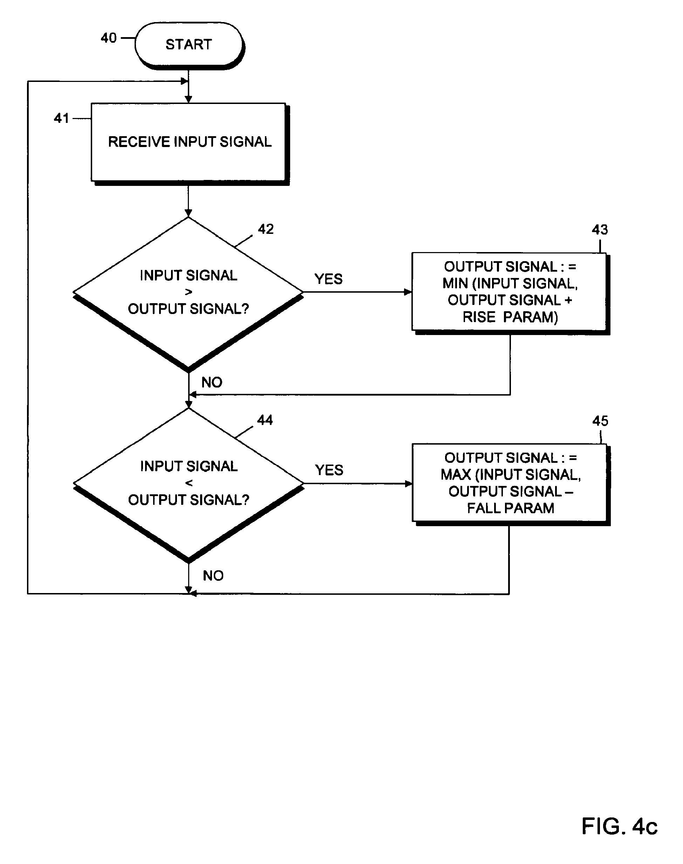

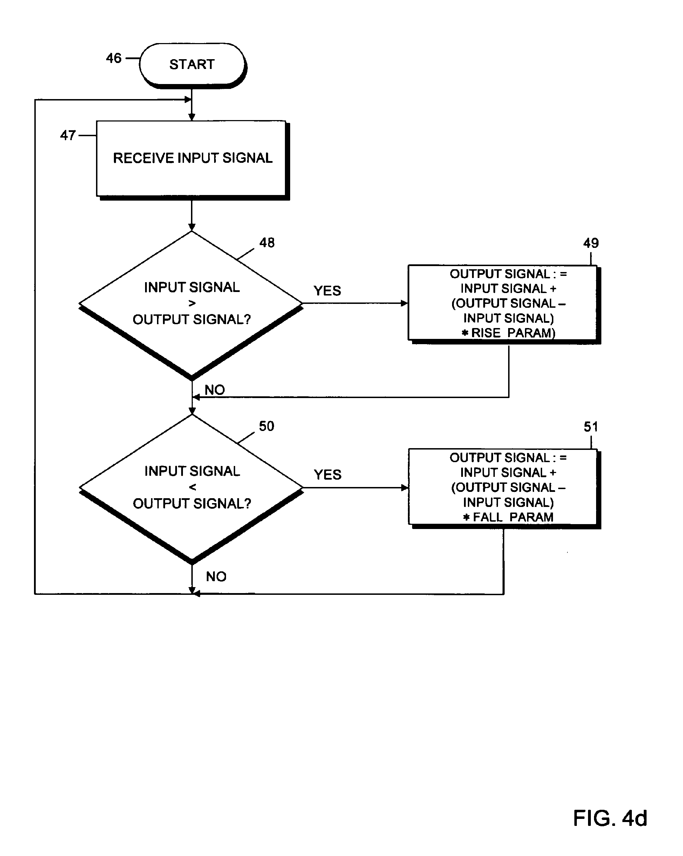

The peak detector unit 26 may for example be realized as an analog circuit 26 as shown in Fig. 4b or may be realized as a digital circuit or as an executable computer program of a digital signal processor as shown in Figs. 4c and 4d.

Fig. 4b shows an embodiment of an analog circuit for the peak detector unit 26 of Fig. 4a. The circuit of the peak detector unit 26 of Fig. 4b comprises a diode 34, a capacitor 35 and a resistor 36. An input signal 18, the peak of which is to be detected, is fed to the circuit 26 at the left hand side in Fig. 4b. This input signal 18 may for example be the band-pass filtered signal 18. Whenever the voltage of the input signal 18 is larger than a current voltage over the capacitor 35, the capacitor 35 is charged by a current flowing from the input 18 via the diode 34 into the capacitor 35. When the voltage at the input 18 is lower than the voltage over the capacitor 35, the diode 34 inhibits a discharging of capacitor 35. Therefore, the voltage over the capacitor 35 represents the peak voltage of the input signal 18. As the peak detector unit 26 shall provide a peak value 27 indicating the peak value of input signal 18 within a predetermined time interval, capacitor 35 is slowly discharged via resistor 36.

Fig. 4c shows another embodiment for a peak detector unit 26 operating as linear peak detector unit, which may be realized as an executable computer program for a digital signal processor or as a digital circuit. At the beginning, indicated with 40 in Fig. 4c, an output signal indicating the peak of an input signal may be set to a predetermined value, for example to zero. In step 41 the input signal is received. In step 42 the input signal is compared with the current output signal. If the input signal is larger than the current output signal (step 42), the output signal is replaced by the lower value of the input signal and the output signal plus a rise parameter, as indicated in step 43. If the input signal is less than the current output signal (step 44), the output signal is replaced by the larger value of the input signal and the output signal minus a fall parameter, as indicated in step 45. Then, the entire procedure is re-started at step 41 for the next input signal sample. In general, the rise parameter is larger than the fall parameter.

Fig. 4d shows another embodiment for a peak detector unit 26 operating as an exponential peak detector. Starting in step 46, an input signal which may be received from the band-pass filter 17 of Fig. 4a, is received in step 47. Next, the input signal is compared with a current output signal of the peak detector unit, as indicated in step 48. If the input signal is larger than the current output signal, the output signal is replaced by the sum of the input signal and a rise parameter multiplied by a difference of the output signal and the input signal, as indicated in step 49. Then, as indicated in step 50, the input signal is compared with the output signal, and, if the input signal is less than the output signal, the output signal is replaced by a sum of the input signal and a fall parameter multiplied by a difference of the output signal and the input signal, as indicated in step 51. Then, the entire procedure is re-started for the next input signal sample at step 47.

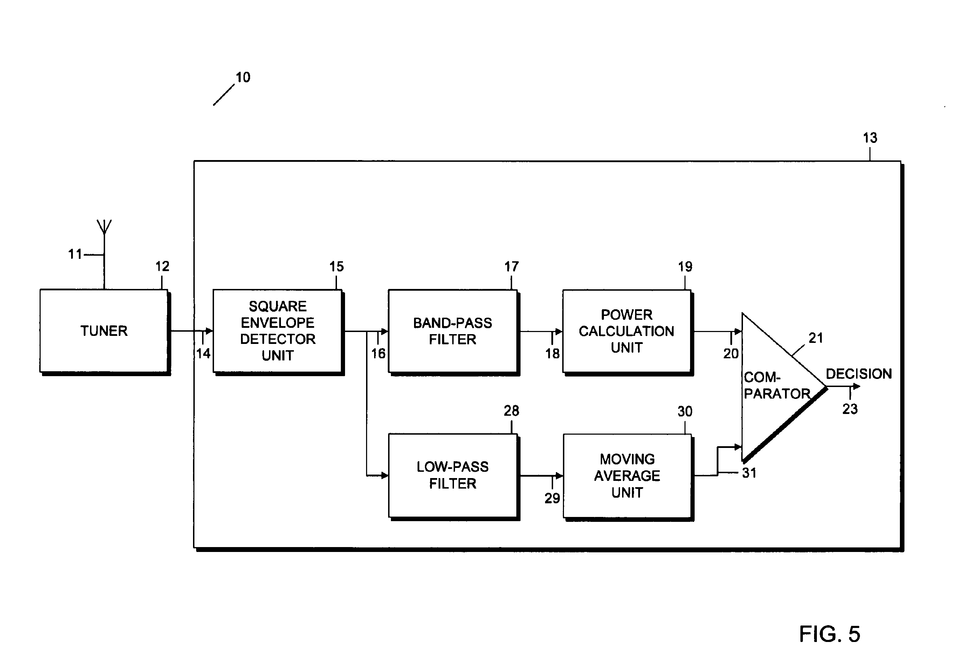

Although in the previous embodiments a predetermined fixed threshold value 22 was used in combination with the comparator 21 to decide whether an interfering adjacent channel signal is present, a variable threshold may also be used. A variable threshold may be a function of the signal power of the wanted signal as will be described in connection with Fig. 5, or a function of a noise estimate at the receiver input.

Fig. 5 shows an embodiment of a receiver unit 10 with a variable threshold. The receiver unit 10 of Fig. 5 substantially corresponds to the receiver unit 10 of Fig. 2 described above. However, the device 13 for detecting an interfering adjacent channel signal now additionally comprises a low-pass filter 28 and a moving average unit 30. The square envelope signal 16 from the square envelope detector unit 15 is additionally passed to the low-pass filter 28 which provides a low-pass filtered signal 29. The cut-off frequency of the low-pass filter 28 is selected in such a way that the low-pass filtered signal 29 is substantially a function of the amplitude of the wanted signal. Therefore, the cut-off frequency of the low-pass filter 28 may be selected for example in a range between $\Delta\omega/32$ and $\Delta\omega/2$. The output of the low-pass filter 28, the low-pass filtered signal 29, then comprises a signal corresponding to the square of the amplitude of the wanted signal, i.e. $A^2$. The low-pass filtered signal 29 is passed to the moving average unit 30 to provide a moving average signal 31 representing an average of the low-pass filtered signal over a predetermined interval. In a digital implementation of the moving average unit the interval may for example comprise 32 samples of the low-pass filtered signal 29. Finally, the moving average signal 31 is scaled by a (not shown) multiplier with a value k in the range of for example 0.01 and 4. The scaled moving average signal 31 is then compared with the power signal 20 of the band-pass filtered signal 18 by the comparator 21. If the power signal 20 exceeds the scaled moving average value 31, comparator 21 indicates via the decision value 23 that an interfering adjacent channel signal is present.

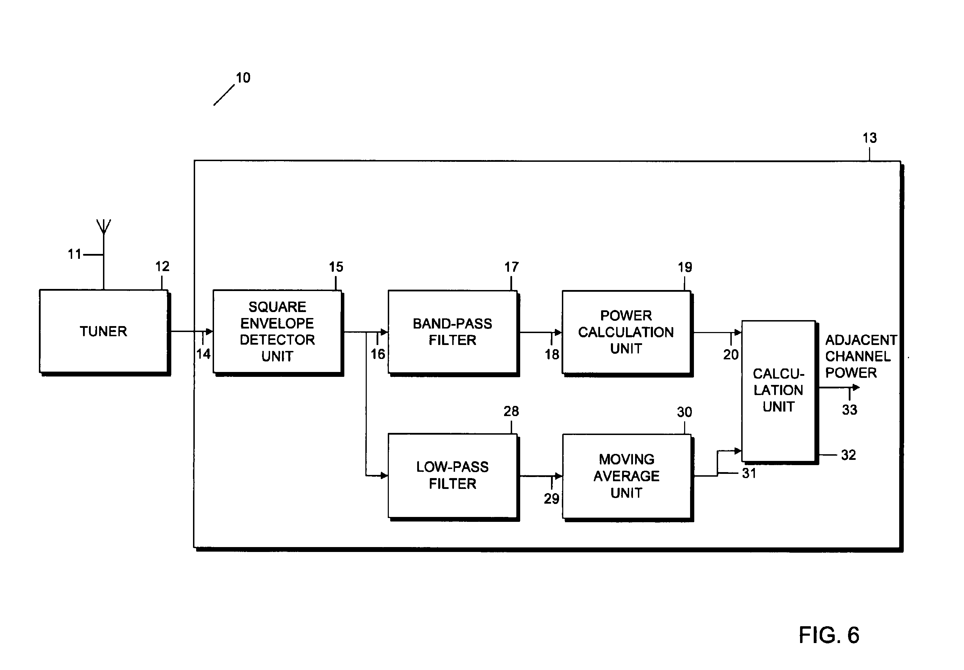

Fig. 6 shows another embodiment of the receiver unit 10. This receiver unit 10 comprises a device 13 for detecting an interfering adjacent channel signal, wherein this device 13 does not provide a decision value indicating the presence of an interfering adjacent channel signal, but providing an output signal indicating the power of an interfering adjacent channel signal.

The device 13 for detecting an interfering adjacent channel signal of Fig. 6 corresponds substantially to the device 13 of Fig. 5. However, instead of comparator 21 in Fig. 5 the device 13 of Fig. 6 now comprises a calculation unit 32 combining the power signal 20 of the power calculation unit 19 and the moving average signal 31 of the moving average unit 30.

As described in connection with Fig. 2, the power signal 20 is a function of the amplitudes of both wanted signal and interfering signal as represented in equation (4). As described in connection with Fig. 5, the moving average signal 31 corresponds to the square of the amplitude of the wanted signal, i.e. $A^2$. By dividing the power signal 20 by the moving average signal 31 and additionally dividing the result by 4, calculation unit 32 provides an adjacent channel power signal 33 corresponding to the square of the amplitude of the interfering adjacent channel signal. The estimates of both amplitude of wanted signal and amplitude of interfering signal may be fed to the tuner 12 for adaptive calculations and settings in the tuner 12.

However, the moving average unit 30 may be omitted in the embodiments of Fig. 5 and Fig. 6 and the low-pass filtered signal 29 may be fed directly to the comparator 29 or calculation unit 32, respectively, if applicable, e.g. if the received signal 14 has a constant modulus property or a very slowly varying modulus.

Although in the above-described embodiments signals with constant modulus property were assumed, the method and the devices may also be used for signals with slowly varying modulus, i.e. when maximum frequency components of the squared envelope is significantly lower than a distance between carriers of wanted signal and interfering signal.

While exemplary embodiments have been described above, various modifications may be implemented in other embodiments.

For example a decimator may be added prior to the comparator to reduce frequency at which the detector output is provided.

Furthermore, an output from the comparator may be fed to a unit providing a hysteresis in time domain. This prevents frequent changes of the decision value indicating the presence of an interfering adjacent channel signal if the level of the interfering adjacent channel signal is in the region near the threshold value. Finally, the unit providing hysteresis may also be part of the tuner.

## Claims

1. A method for detecting an interfering adjacent channel signal, the method comprising the steps of:

   - receiving (1) a signal (14) comprising a wanted signal and the interfering adjacent channel signal,
   - determining (2) a square envelope signal (16) of the received signal (14), and
   - analyzing (3-7) the square envelope signal (16) to detect the interfering adjacent channel signal.

2. The method according to claim 1, wherein the received signal (14) comprises a complex baseband signal of the wanted signal.

3. The method according to claim 1 or claim 2, wherein the wanted signal has a substantially constant modulus property.

4. The method according to claim 1 or claim 2, wherein the wanted signal has a slowly varying modulus.

5. The method according to claim 4, wherein the frequency of the slowly varying modulus is less than half of the distance between carriers of the wanted signal and the interfering adjacent channel signal.

**6.** The method according to any of the preceding claims, wherein analyzing (3-7) the square envelope signal (16) comprises a frequency content analysis of the square envelope signal (16) around a frequency that is equal to the distance between carriers of the wanted signal and the interfering adjacent channel signal.

**7.** The method according to any of the preceding claims, wherein analyzing the square envelope signal further comprises the steps of:

- band-pass filtering the square envelope signal (16) to provide a band-pass filtered signal (18),
- determining a peak value (27) of the band-pass filtered signal (18), and
- determining if an interfering adjacent channel signal is present by comparing the peak value (27) of the band-pass filtered signal (18) with a predetermined threshold value (22).

**8.** The method according to any of the preceding claims, wherein analyzing (3-7) the square envelope signal further comprises the steps of:

- band-pass filtering (3) the square envelope signal (16) to provide a band-pass filtered signal (18),
- determining (4) the power (20) of the band-pass filtered signal (18), and
- determining (5-7) if an interfering adjacent channel signal is present by comparing the power (20) of the band-pass filtered signal (18) with a predetermined threshold value (22).

**9.** The method according to any of claims 1 to 7, wherein analyzing the square envelope signal (16) further comprises the steps of:

- high-pass filtering the square envelope signal (16) to provide a high-pass filtered signal (25),
- determining the power (20) of the high-pass filtered signal (25), and
- determining if an interfering adjacent channel signal is present by comparing the power (20) of the high-pass filtered signal (25) with a predetermined threshold value (22).

**10.** The method according to any of claims 1 to 7, wherein analyzing the square envelope signal further comprises the steps of:

- band-pass filtering the square envelope signal (16) to provide a band-pass filtered signal (18),
- determining the power (20) of the band-pass filtered signal (18),
- low-pass filtering the square envelope signal (16) to provide a low-pass filtered signal (29), and
- determining if an interfering adjacent channel signal is present by comparing the power (20) of the band-pass filtered signal (18) with the low-pass filtered signal (29).

**11.** The method according to any of claims 1 to 7, wherein analyzing the square envelope signal further comprises the steps of:

- band-pass filtering the square envelope signal (16) to provide a band-pass filtered signal (18),
- determining the power (20) of the band-pass filtered signal (18),
- low-pass filtering the square envelope signal (16) to provide a low-pass filtered signal (29),
- determining a moving average (31) of the low-pass filtered signal (29), and
- determining if an interfering adjacent channel signal is present by comparing the power (20) of the band-pass filtered signal (18) with the moving average (31) of the low-pass filtered signal (29).

**12.** The method according to any of claims 1 to 7, wherein analyzing the square envelope signal further comprises the steps of:

- band-pass filtering the square envelope signal (16) to provide a band-pass filtered signal (18),
- determining the power (20) of the band-pass filtered signal (18),
- low-pass filtering the square envelope signal (16) to provide a low-pass filtered signal (29), and
- determining the power (33) of the interfering adjacent channel signal from the power (20) of the band-pass filtered signal (18) and the low-pass filtered signal (29).

**13.** The method according to any of claims 1 to 7, wherein analyzing the square envelope signal further comprises the steps of:

- band-pass filtering the square envelope signal (16) to provide a band-pass filtered signal (18),
- determining the power (20) of the band-pass filtered signal (18),
- low-pass filtering the square envelope signal (16) to provide a low-pass filtered signal (29),
- determining a moving average (31) of the low-pass filtered signal (29), and
- determining the power (33) of the interfering adjacent channel signal from the power (20) of the band-pass filtered signal (18) and the moving average (31) of the low-pass filtered signal (29).

14. The method according to any of the preceding claims, wherein the received signal (14) comprises a frequency-modulated broadcast signal.

15. A device for detecting an interfering adjacent channel signal, the device (13) comprising:

- an input for receiving a signal (14) comprising a wanted signal and an interfering adjacent channel signal,
- a square envelope detector unit (15) adapted to determine a square envelope signal (16) of the received signal (14), and
- an analyzing means adapted to analyze the square envelope signal (16) to detect the interfering adjacent channel signal.

16. The device according to claim 15, wherein the received signal (14) comprises a complex baseband signal of the wanted signal.

17. The device according to claim 15 or claim 16, wherein the wanted signal has a constant modulus property.

18. The device according to claim 15 or claim 16, wherein the wanted signal has a slowly varying modulus.

19. The device according to claim 18, wherein the frequency of the slowly varying modulus is less than half of the distance between carriers of the wanted signal and the interfering adjacent channel signal.

20. The device according to any of claims 15-19, wherein the analyzing means further comprises:

- a band-pass filter (17) adapted to filter the square envelope signal (16) to provide a band-pass filtered signal (18),
- a peak detector unit (26) adapted to determine a peak value (27) of the band-pass filtered signal (18), and
- a comparator (21) adapted to compare the peak value (27) of the band-pass filtered signal (18) with a predetermined threshold value (22).

21. The device according to any of claims 15-20, wherein the analyzing means further comprises:

- a band-pass filter (17) adapted to filter the square envelope signal (16) to provide a band-pass filtered signal (18),
- a power calculation unit (19) adapted to determine the power (20) of the band-pass filtered signal (18), and
- a comparator (21) adapted to compare the power (20) of the band-pass filtered signal (18) with a predetermined threshold value (22).

22. The device according to any of claims 15-20, wherein the analyzing means further comprises:

- a high-pass filter (24) adapted to filter the square envelope signal (16) to provide a high-pass filtered signal (25),
- a power calculation unit (19) adapted to determine the power (20) of the high-pass filtered signal (25), and
- a comparator (21) adapted to compare the power (20) of the high-pass filtered signal (25) with a predetermined threshold value (22).

23. The device according to any of claims 15-20, wherein the analyzing means further comprises:

- a band-pass filter (17) adapted to filter the square envelope signal (16) to provide a band-pass filtered signal (18),
- a power calculation unit (19) adapted to determine the power (20) of the band-pass filtered signal (18),
- a low-pass filter (28) adapted to filter the square envelope signal (16) to provide a low-pass filtered signal (29), and
- a comparator (21) adapted to compare the power (20) of the band-pass filtered signal (18) with the low-pass filtered signal (29).

**24.** The device according to any of claims 15-20, wherein the analyzing means further comprises:

- a band-pass filter (17) adapted to filter the square envelope signal (16) to provide a band-pass filtered signal (18),
- a power calculation unit (19) adapted to determine the power (20) of the band-pass filtered signal (18),
- a low-pass filter (28) adapted to filter the square envelope signal (16) to provide a low-pass filtered signal (29),
- a moving average unit (30) adapted to determine a moving average (31) of the low-pass filtered signal (29), and
- a comparator (21) adapted to compare the power (20) of the band-pass filtered signal (18) with the moving average (31) of the low-pass filtered signal (29).

**25.** The device according to any of claims 15-20, wherein the analyzing means further comprises:

- a band-pass filter (17) adapted to filter the square envelope signal (16) to provide a band-pass filtered signal (18),
- a power calculation unit (19) adapted to determine the power (20) of the band-pass filtered signal (18),
- a low-pass filter (28) adapted to filter the square envelope signal (16) to provide a low-pass filtered signal (29), and
- a calculation unit (32) adapted to determine the power (33) of the interfering adjacent channel signal from the power (20) of the band-pass filtered signal (18) and the low-pass filtered signal (29).

**26.** The device according to any of claims 15-20, wherein the analyzing means further comprises:

- a band-pass filter (17) adapted to filter the square envelope signal (16) to provide a band-pass filtered signal (18),
- a power calculation unit (19) adapted to determine the power (20) of the band-pass filtered signal (18),
- a low-pass filter (28) adapted to filter the square envelope signal (16) to provide a low-pass filtered signal (29),
- a moving average unit (30) adapted to determine a moving average (31) of the low-pass filtered signal (29), and
- a calculation unit (32) adapted to determine the power (33) of the interfering adjacent channel signal from the power (20) of the band-pass filtered signal (18) and the moving average (31) of the low-pass filtered signal (29).

**27.** The device according to any of claims 15-26, wherein the received signal (14) comprises a frequency modulated broadcast signal.

**28.** A receiver unit (10), comprising

- a tuner (12) adapted to receive frequency-modulated signals comprising a wanted signal and an interfering adjacent channel signal and adapted to provide a received signal (14) comprising a complex baseband signal of the wanted signal, and
- a device (13) for detecting an interfering adjacent channel signal as defined in any of claims 15-27.

1 ——— RECEIVE WANTED SIGNAL AND INTERFERING ADJACENT CHANNEL SIGNAL

2 ——— DETERMINE SQUARE ENVELOPE SIGNAL OF RECEIVED SIGNAL

3 ——— FILTER SQUARE ENVELOPE SIGNAL WITH BAND-PASS

4 ——— DETERMINE POWER OF BAND-PASS FILTERED SIGNAL

5 —— POWER > THRESHOLD ?

YES → 6 INTERFERING ADJACENT CHANNEL SIGNAL PRESENT

NO

7 ——— INTERFERING ADJACENT CHANNEL SIGNAL NOT PRESENT

FIG. 1

FIG. 2

FIG. 3

EP 2 136 489 A1

FIG. 4a

FIG. 4b

40 — ( START )

41 — | RECEIVE INPUT SIGNAL |

42

INPUT SIGNAL > OUTPUT SIGNAL? — YES → 43 | OUTPUT SIGNAL : = MIN (INPUT SIGNAL, OUTPUT SIGNAL + RISE PARAM) |

NO

44

INPUT SIGNAL < OUTPUT SIGNAL? — YES → 45 | OUTPUT SIGNAL : = MAX (INPUT SIGNAL, OUTPUT SIGNAL − FALL PARAM |

NO

FIG. 4c

46 — START

47 — RECEIVE INPUT SIGNAL

48

INPUT SIGNAL > OUTPUT SIGNAL?

YES →

49

OUTPUT SIGNAL : = INPUT SIGNAL + (OUTPUT SIGNAL − INPUT SIGNAL) * RISE_PARAM)

NO

50

INPUT SIGNAL < OUTPUT SIGNAL?

YES →

51

OUTPUT SIGNAL : = INPUT SIGNAL + (OUTPUT SIGNAL − INPUT SIGNAL) * FALL_PARAM

NO

FIG. 4d

**FIG. 5**

TUNER — 12

11

13

SQUARE ENVELOPE DETECTOR UNIT — 15

14

BAND-PASS FILTER — 17

16

POWER CALCULATION UNIT — 19

18

COM-PARATOR — 21

20

DECISION — 23

LOW-PASS FILTER — 28

MOVING AVERAGE UNIT — 30

29

31

10

FIG. 6

Europäisches
Patentamt
European
Patent Office
Office européen
des brevets

# EUROPEAN SEARCH REPORT

Application Number

EP 08 01 0955

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2006/269021 A1 (IBRAHIM BRIMA [US] ET AL) 30 November 2006 (2006-11-30)<br><br>* paragraph [0103] - paragraph [0107]; claims 1,3,4,6; figure 6 *<br>* paragraph [0036] *<br>----- | 1,9,14, 15,22, 27,28 | INV.<br>H04B17/00<br>H04B1/10 |
| X | JP 59 194542 A (NIPPON TELEGRAPH & TELEPHONE) 5 November 1984 (1984-11-05)<br>* abstract *<br>----- | 1,15,28 | |
| X | KOZONO S: "Co-channel interference measurement method for mobile communication"<br>IEEE TRANSACTIONS ON VEHICULAR TECHNOLOGY, IEEE SERVICE CENTER, PISCATAWAY, NJ, US, vol. VT-36, no. 1,<br>1 February 1987 (1987-02-01), pages 7-13, XP002109221<br>ISSN: 0018-9545<br>* paragraph [000I] - paragraph [00II]; figures 2,3 *<br>----- | 1,15,28 | TECHNICAL FIELDS SEARCHED (IPC)<br><br>H04B |

The present search report has been drawn up for all claims

| Place of search | Date of completion of the search | Examiner |
|---|---|---|
| Munich | 26 November 2008 | Burghardt, Gisela |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**

EP 08 01 0955

This annex lists the patent family members relating to the patent documents cited in the above-mentioned European search report.
The members are as contained in the European Patent Office EDP file on
The European Patent Office is in no way liable for these particulars which are merely given for the purpose of information.

26-11-2008

| Patent document cited in search report | | Publication date | Patent family member(s) | | Publication date |
|---|---|---|---|---|---|
| US 2006269021 | A1 | 30-11-2006 | NONE | | |
| JP 59194542 | A | 05-11-1984 | JP | 1019779 B | 13-04-1989 |
| | | | JP | 1538124 C | 16-01-1990 |

For more details about this annex : see Official Journal of the European Patent Office, No. 12/82